Europäisches Patentamt

European Patent Office

Office européen des brevets

(19)

(11) **EP 0 698 003 B1**

(12) **EUROPÄISCHE PATENTSCHRIFT**

(45) Veröffentlichungstag und Bekanntmachung des Hinweises auf die Patenterteilung:
**10.06.1998 Patentblatt 1998/24**

(21) Anmeldenummer: **94911918.4**

(22) Anmeldetag: **17.03.1994**

(51) Int Cl.$^6$: **C04B 35/58**

(86) Internationale Anmeldenummer:
**PCT/EP94/00853**

(87) Internationale Veröffentlichungsnummer:
**WO 94/24066 (27.10.1994 Gazette 1994/24)**

(54) **KERAMISCHES BAUTEIL AUS HOCHFESTEM SILIZIUMNITRID FÜR DEN MOTOREN-, MASCHINEN- UND GERÄTEBAU**

HIGH-STRENGTH SILICON NITRIDE CERAMIC COMPONENT FOR USE IN ENGINES, MACHINERY AND EQUIPMENT

ELEMENT EN CERAMIQUE AU NITRURE DE SILICIUM A RESISTANCE ELEVEE UTILISE DANS LA CONSTRUCTION DE MOTEURS, MACHINES ET APPAREILS

(84) Benannte Vertragsstaaten:
**AT BE DE ES FR GB IT NL SE**

(30) Priorität: **15.04.1993 DE 4312251**

(43) Veröffentlichungstag der Anmeldung:
**28.02.1996 Patentblatt 1996/09**

(73) Patentinhaber: **CeramTec AG Innovative Ceramic Engineering**
**73207 Plochingen (DE)**

(72) Erfinder:
• **HEINRICH, Jürgen**
  **D-95100 Selb (DE)**
• **HAMMINGER, Rainer**
  **D-68199 Mannheim (DE)**
• **DÖTSCH, Petra**
  **D-95100 Selb (DE)**
• **STEINER, Matthias**
  **D-95100 Selb (DE)**
• **ROSENFELDER, Ottmar**
  **D-95100 Selb (DE)**

• **BOBERSKI, Cornelia**
  **D-65835 Liederbach (DE)**
• **KRÜNER, Hartmut**
  **D-65817 Eppstein/Taunus (DE)**
• **NEUMANN, Jürgen**
  **D-65779 Kelkheim/Taunus (DE)**
• **OLT, Volker**
  **D-64347 Griesheim (DE)**
• **THIEMEIER, Thomas**
  **D-65795 Hattersheim (DE)**
• **RIEDEL, Günter**
  **D-65779 Kelkheim/Taunus (DE)**

(56) Entgegenhaltungen:
**EP-A- 0 227 471          EP-A- 0 492 564**

• **JOURNAL OF THE CERAMIC SOCIETY OF JAPAN Bd. 100, Nr. 6 , Juni 1992 , TOKYO, JP Seiten 817 - 820 XP323202 N. HIROSAKI ET AL. 'Gas-pressure sintering of -silicon nitride'**
• **DATABASE WPI Week 8645, Derwent Publications Ltd., London, GB; AN 86-296270 'Sintered silicon nitride mfr.' & JP,A,61 219 761 (UBE INDUSTRIES KK) 30. September 1986**

**Beschreibung**

Die Fortentwicklung von Hubkolbenverbrennungsmotoren ist nach wie vor ein wichtiger Forschungsschwerpunkt, wobei die Reduktion der Schadstoffemissionen und Treibstoffverbräuche im Vordergrund steht. Daß die Verwendung keramischer Motorenbauteile im Hinblick auf die angestrebten Verbesserungen Vorteile bietet, ist unbestritten, weil die Keramik neben einer größeren Härte gegenüber Metall zusätzlich auch eine geringere Dichte besitzt. Es werden aber immer noch keramische Werkstoffe und Herstellungsverfahren gesucht, die im Hinblick auf ihre Zuverlässigkeit und ihre Qualitätskonstanz den für den Einsatz in Serienfahrzeugen notwendigen hohen Standard erreichen. Derartige, vor allem auch auf hohe Temperatur und Schwingungen belastbare Bauteile sind nicht nur für Hubkolben- und andere Motoren, sondern auch für den Maschinen- und Gerätebau bedeutsam.

So sind zum Beispiel Ventile im Betrieb schlagartig wirkenden Dauerbeanspruchungen unterworfen, die im Schaft Zug- und Druckspannungen mit zusätzlichen Biegebeanspruchungen, im Teller Biegebeanspruchungen, im Sitz und am oberen Schaftende Druckbeanspruchungen hervorrufen. Die Höhe der Belastung ist von der Form und vom Gewicht des Ventils, ferner vom dynamischen Verhalten des Ventiltriebes über den jeweiligen Drehzahlbereich abhängig. Zu diesen mechanischen Beanspruchungen treten, vor allem beim Auslaßventil, thermische Belastungen von beträchtlicher Höhe auf. Zusätzlich treten an den Teilen des Ventiles, die den Verbrennungsgasen ausgesetzt sind, unter Umständen auch heftige Korrosionsangriffe auf, die ihrerseits den Verschleiß stark erhöhen.

Die thermische Beaufschlagung der Auslaßventile von Verbrennungsmotoren erfolgt zeitlich instationär. Der Vorgang wiederholt sich periodisch von Arbeitsspiel zu Arbeitsspiel. Das gilt für den gasseitigen Wärmeeinfall ebenso wie für die Wärmetransportvorgänge am Ventilsitz und am Ventilschaft. Trotz dieser instationären Wärmebeaufschlagung stellt sich im Auslaßventil - abgesehen von einer dünnen instationären Randzone - bereits nach kurzer Betriebszeit ein stationäres Temperaturfeld in Abhängigkeit vom jeweiligen Betriebspunkt des Motors ein. Das liegt vor allem daran, daß selbst bei langsam laufenden Motoren dieser instationäre Wärmeübergang noch relativ hochfrequent abläuft. Die an der Ventiloberfläche auftretenden Temperaturschwankungen von ca. 20 °C klingen bereits nach wenigen Millimetern Eindringtiefe ab, wobei die instationäre Randzone mit steigender Motorendrehzahl immer dünner wird. Für die Ausbildung des stationären Temperaturfeldes ist es deshalb unerheblich, daß die Wärmebeaufschlagung eigentlich instationär erfolgt. Entscheidend ist vielmehr, in welcher Quantität und an welchen Stellen der Ventiloberfläche die Wärmemengen zu- oder abgeführt werden. Das Niveau des stationären Temperaturfeldes pendelt sich für jeden Betriebspunkt des Motors so ein, daß zu- und abgeführte Wärmemengen im Gleichgewicht sind.

Zu den mechanischen Beanspruchungen wird angenommen, daß im Ventilschaft keine Querkräfte oder Biegemomente auftreten. Diese Beanspruchungen würden durch ungenaues Aufsetzen des Ventiltellers auf den Ventilsitz hervorgerufen. Die Ursachen hierfür können verschiedenster Art sein. Sie sind am häufigsten auf Verformungen des Sitzes im Block oder im Kopf und auf Abweichungen in der Achsenlage zwischen Sitz und Führung zurückzuführen. Im Gegensatz zu früheren Untersuchungen wird die elastische Verformung des Ventilsitzes berücksichtigt, Fertigungseinflüsse oder Materialeigenspannungen werden dagegen vernächlässigt.

Der Vergleich der derzeit international angebotenen kommerziellen Siliziumnitridwerkstoffqualitäten (siehe Daimler Benz AG: Schlußbericht zum Forschungsvorhaben "Entwicklung und Erprobung dynamisch beanspruchter Motorteile aus Keramik", BMFT-Förderkennzeichen 03M2029C8, Feb. 1992) zeigt, daß insbesondere japanische Anbieter $Si_3N_4$-Werkstoffe für spezielle Anwendungsgebiete entwickelt haben. Dichte $Si_3N_4$-Werkstoffe für den Einsatz bei Temperaturen oberhalb 1000 °C zeichnen sich durch ein vergleichsweise grobkörniges Gefüge mit in-situ-Whiskern und meist vollständig auskristallisierten Zwischenkorngrenzenphasen aus. Die Messung der Biegebruchfestigkeit dieses Materials gemäß der oben angegebenen Literaturstelle 'Schlußbericht' erfolgte nicht an Standardbiegeproben, sondern an von ihrer Geometrie her kleineren Daimler-Benz-Biegeproben (vergleiche Seite 16). Alle in dem Schlußbericht angegebenen Biegebruchfestigkeitswerte müssen deshalb nach der auf den Seiten 16 und 17 beschriebenen Vorgehensweise auf Standardbiegebruchfestigkeiten umgerechnet werden, um Vergleiche zu ermöglichen. So liegt die Biegebruchfestigkeit des bekannten Materials bei 842 MPa (umgerechnet aus der Angabe in Schlußbericht, 930 MPa) und fällt bis 1400 °C nur leicht ab.

Daneben werden Werkstoffe beschrieben, die sich durch Biegebruchfestigkeiten bei Raumtemperatur bis zu 1130 MPa (umgerechnet aus der Angabe in Schlußbericht 1250 MPa) auszeichnen und sich nur für den Einsatz bei Temperaturen unterhalb von 1000 °C eignen. Das Gefüge derartiger $Si_3N_4$-Werkstoffe ist sehr feinkörnig und weist einen hohen Streckungsgrad der $\beta$-$Si_3N_4$-Körner auf. Die Beschaffenheit der amorphen Korngrenzenphase führt allerdings zu einem steilen Abfall der Festigkeit bei hohen Temperaturen (Kriechverformung). Die Hochtemperaturbiegebruchfestigkeit bei 1000 °C beträgt nur 480 MPa (umgerechnet aus der Angabe in Schlußbericht 530 MPa).

Die US-A-4,870,036 beschreibt auch ein Material, das in erster Linie für den Hochtemperaturbereich (1400 °C) vorgesehen ist. Es weist bei Raumtemperatur eine Biegebruchfestigkeit von etwa 900 MPa auf, die bei Temperaturen bis zu 1400 °C auf einen Wert von etwa 600 MPa absinkt. Eine Angaoe der für die Herstellung von Automobilteilen besonders wichtigen Zuverlässigkeit (Weibull Modul) fehlt jedoch. Darüber hinaus konnte der beschriebene Werkstoff nur mit dem spezifischen Sinterhilfsmittel Strontiumoxid und mit dem sehr aufwendigen Sinterverfahren des heißisostatischen Pressens hergestellt werden.

Werkstoffe mit hoher Raumtemperaturbiegebruchfestigkeit weisen darüber hinaus relativ niedrige Bruchzähigkeiten von maximal 8 MPa·$\sqrt{m}$ auf. Die derzeit verfügbaren Werkstoffe mit Bruchzähigkeiten von 9 MPa·$\sqrt{m}$ und mehr besitzen dagegen nachteiligerweise nur relativ geringe Raumtemperaturbiegebruchfestigkeiten von unter 700 MPa. All diese Werkstoffe sind für die Anwendung als Ventil im Motorenbau nur bedingt geeignet.

Die Charakterisierung der Festigkeit keramischer Werkstoffe erfolgt üblicherweise im 4-Punktbiegeversuch an 30 oder mehr Biegeproben. Die einfachste, aber am wenigsten aussagekräftige Auswertung stellt die Berechnung des arithmetischen Mittelwertes und der Standardabweichung dar. Diese Angaben sind jedoch für die konstruktive Auslegung von Komponenten aus keramischen Werkstoffen nicht ausreichend, da die Automobilindustrie berechtigterweise Festigkeitsangaben bei einer Ausfallwahrscheinlichkeit nahe Null erwartet.

Seit vielen Jahren ist es deshalb üblich, das mechanische Versagensverhalten von Motorenteilen anhand der Weibull-Theorie zu beschreiben (D. Munz und T. Fett: Mechanisches Verhalten keramischer Werkstoffe, WFT, Werkstoff-Forschung und -Technik 8, Springer Verlag 1989) und die Festigkeit durch die beiden Verteilungsparameter der zweiparametrigen Weibullverteilung ($\sigma_o$ und m) zu charakterisieren. Das Versagensverhalten wird üblicherweise dann im sogenannten Weibulldiagramm dargestellt. Im Weibulldiagramm für Biegebruchfestigkeitsmeßwerte ist der Zusammenhang zwischen der Belastung (maximale Biegespannung) und der zugehörigen Ausfallwahrscheinlichkeit aufgetragen. Der Achsenmaßstab ist so gewählt, daß die Meßpunkte auf einer Geraden liegen, wenn die Meßpunkte Weibull-verteilt sind. Bei entsprechend sorgfältig durchgeführter Charakterisierung (im Einklang mit DIN 51110, Teile 1 bis 3; oder EN 843, Teil 1) sind monolithische keramische Hochleistungswerkstoffe Weibull-verteilt.

Eine mathematisch eindeutige Festigkeitsangabe erfolgt daher durch eine Gerade im Weibulldiagramm. Diese Gerade läßt sich entweder durch einen Punkt und die Steigung m dieser Geraden oder durch zwei Punkte beschreiben. Die Steigung m ist der sogenannte Weibullmodul. Unabhängig von einem niedrigen oder hohen Festigkeitsniveau gibt der Weibullmodul diese Steigung im Weibulldiagramm an. Ein hoher Weibullmodul sorgt für eine steile Gerade mit einer niedrigen Schwankung der Festigkeitswerte, d.h. eine schmale Verteilung, während ein zahlenmäßig kleiner Weibullmodul ein Indiz für eine große Streuung, d.h. breite Verteilung, ist.

Da aber mehrere Meßreihen eines Werkstoffes und viel eher noch mehrere Meßreihen verschiedenartiger Werkstoffe nicht auf die gleiche Gerade fallen und auch nicht über eine Gerade voneinander abgrenzbar sind, kann eine mathematisch klare Abgrenzung nur über einen Punkt in diesem Weibulldiagramm erfolgen, der im Bereich der vom Anwender geforderten, gerade noch zulässigen Ausfallwahrscheinlichkeit liegen sollte. Die Lage dieses Punktes ist über seine zwei Koordinaten eindeutig beschrieben.

Bei der üblichen Angabe einer mittleren Festigkeit wird der arithmetische Mittelwert der Prüfresultate verwendet, der die Biegebruchfestigkeit bei einer Ausfallwahrscheinlichkeit von 50 % beziffert. Im Rahmen der vorliegenden Erfindung wird statt der mittleren Festigkeit die Festigkeit bei einer Ausfallwahrscheinlichkeit von $1\cdot10^{-6}$ gewählt, um einen Wert möglichst nahe Null anzugeben. Der Wert Null kann mathematisch nicht gewählt werden, wie die Skalierung der Ausfallwahrscheinlichkeit im Weibulldiagramm bereits andeutet. Die Ausfallwahrscheinlichkeit $1\cdot10^{-6}$ ist eine in der Automobilindustrie übliche Größe, für die eine Bauteilauslegung durchgeführt wird. Sie bedeutet, daß statistisch gesehen nur ein Teil von 1 Million Teilen bei dieser Belastung ausfällt. Hierbei wird, wie in der Bruchmechanik üblich, eine Gerade durch die Messungen gelegt und dadurch zu niedrigen Ausfallwahrscheinlichkeiten extrapoliert, indem die Gerade nach unten verlängert wird.

Aufgabe der vorliegenden Erfindung war es also, ein Bauteil aus hochfester Siliziumnitridkeramik bereitzustellen, das sowohl eine hohe Biegebruchfestigkeit beziehungsweise Biegebelastbarkeit bei Raumtemperatur als auch eine hohe Biegebruchfestigkeit beziehungsweise Biegebelastbarkeit bei Temperaturen von ca. 1000 °C, bei jeweils niedrigen Ausfallwahrscheinlichkeiten, besitzt und das zusätzlich in Kombination damit auch noch eine so hohe Bruchzähigkeit besitzt, daß es die Qualitätsanforderungen für den Serienmotorenbau erfüllt.

Gelöst wird diese Aufgabe durch ein Bauteil aus einer besonders hochfesten Siliziumnitridkeramik für den Motoren-, Maschinen- und Gerätebau, das dadurch gekennzeichnet ist, daß für die Herstellung der Siliziumnitridkeramik eine Mischung aus $\geq$ 87,5 Gew.-% $Si_3N_4$-Pulver mit $\leq$ 12,5 Gew.-% Sinteradditiven, die $Al_2O_3$- und $Y_2O_3$-Pulver enthalten, verwendet wurde und daß die Siliziumnitridkeramik die folgenden Eigenschaften in Kombination aufweist:

- eine Raumtemperaturbiegebelastbarkeit von mindestens 600 MPa bei einer Ausfallwahrscheinlichkeit von $1\cdot10^{-6}$;
- eine Hochtemperaturbiegebelastbarkeit bei 1000 °C von mindestens 350 MPa bei einer Ausfallwahrscheinlichkeit von $1\cdot10^{-6}$;
- eine Bruchzähigkeit von mindestens 6 MPa·$\sqrt{m}$ bei 20 bis 1000 °C; und
- eine maximale Kriechrate bei einer Belastung von 130 MPa bei 1200 °C von $1\cdot10^{-4}$ 1/h.

Vorzugsweise beträgt die Hochtemperaturbiegebelastbarkeit bei 1000 °C 380 MPa, besonders bevorzugt mindestens 400 MPa, jeweils bei einer Ausfallwahrscheinlichkeit von $1\cdot10^{-6}$, wobei gleichzeitig die Bruchzähigkeit einen Wert von vorzugsweise $\geq$ 7, besonders bevorzugt $\geq$ 7,5 MPa·$\sqrt{m}$, einnimmt.

Unter einem Bauteil, insbesondere einem mechanisch hochbeanspruchten Bauteil, ist erfindungsgemäß ein Ein- oder Auslaßventil als solches, ein Ventilsitzring, eine Ventilführung, ein Turboladerrotor, eine Glühkerze, ein Glühstift, eine Vorbrennkammer, eine Wirbelkammer, eine Einspritzdüse, eine Kipphebelschaltung, ein Kolben, ein Kolbenboden, ein Kolbenring, ein Kolbenbolzen, eine Zylinderlaufbüchse, ein Tassenstößel, ein Ventilfederteller, eine Nockenwelle und/oder deren Einzelkomponenten, eine Zylinderkopfplatte oder eine Kipphebelrolle zu verstehen.

Für die Charakterisierung der mechanischen und der weiteren im folgenden aufgeführten Eigenschaften wurden prismatische Stäbe aus den Ventilschäften in Anlehnung an DIN 51110, Teil 1, wie folgt herauspräpariert:

Das Heraustrennen der Prüfkörperrohstäbe aus dem Ventilschaft erfolgte mittels einer Diamanttrennmaschine oder durch Schleifbearbeitung auf einer Pendelschleifmaschine. Die Stäbe wurden auf die Rohmaße von 5x4x45 mm planparallel (± 0,05mm) und rechtwinklig (± 1°) bearbeitet.

Die Rohkörper wurden anschließend auf einer Flächenschleifmaschine im Pendelschleifverfahren auf die Endmaße geschliffen, wobei die Zustellung/Schleifhub auf den letzten 100 µm von vorher 2 bis 3 µm/Hub auf 1 µm/Hub reduziert wurde, um Schädigungen und Eigenspannungen im Prüfkörper möglichst gering zu halten. Für die Bearbeitung wurde eine Diamantumfangsschleifscheibe mit einer feinen Körnung (< $D_{46}$ gemäß FEPA-Standard; Korngrößen < 46 µm) verwendet.

Nach der Schleifbearbeitung erfolgte die Endpräparation der zugbelasteten Oberfläche durch einen zweistufigen Läpp- und Polierläppvorgang. Im ersten Schritt wird die Oberfläche lichtmikroskopisch ausgewertet kratzerfrei mit einer mittelfeinen B4C/SiC-Läppmittelsuspension (Korngrößen ca. 20 bis 30 µm) mattgeläppt und im Polierschritt mittels einer feinen Diamantsuspension (Korngrößen ca. 2 bis 3 µm) auf Hochglanz bearbeitet. Bei diesen Verfahrensschritten wurde besonders auf Sauberkeit geachtet, da die geringste Verschleppung von Läppulver in den Polierschritt Oberflächenbeschädigungen hervorrufen würden.

Den Abschluß der Probenpräparation bildet die Verrundung der zugbelasteten Längskanten auf einen Kantenradius von circa 0,15 mm. Diese Bearbeitung wurde per Hand auf einer feinkörnigen Diamantpolierscheibe (Korngrößen ≤ 10 µm) überwiegend in Probenlängsrichtung durchgeführt.

Zur Prüfung der Qualität der Oberflächenpräparation wurden die Probenzugseiten und deren Längskanten im Stereolichtmikroskop auf Ausbrüche und Kratzer begutachtet. Bei kleinen Ausbrüchen an den Kanten und schwachen Kratzern wurde nachpräpariert. Proben mit Kantenausbrüchen von ≥ 0,2 mm und stärkeren Kratzern wurden nicht nachbearbeitet, sondern aussortiert.

Die Charakterisierung der Materialfestigkeit und -belastbarkeit erfolgte im Vierpunktbiegeversuch in Anlehnung an DIN EN 843, Teil 1. Die Prüfung erfolgte unter den nachfolgend tabellarisch beschriebenen Bedingungen.

| Prüfung | 4-Punkt-Biegebelastbarkeit |
| --- | --- |
| Probenzahl | mindestens 30 |
| Probenabmessungen (BxHxL) | 4,0 ± 0,02 3,0 ± 0,02 ≥ 45 mm |
| Prüfmaschine | Universalprüfmaschine |
| Biegeauflagergeometrie | 40/20 mm, statisch bestimmt, alle Rollen drehbar, 3 Rollen kippbar |
| Umgebungsbedingungen | 20 °C, 50 bis 55 % rel. Feuchte |
| Belastungsgeschwindigkeit | 240 N/s $\triangleq$ 200 MPa/s |
| Belastungsmodus | kraftgeregelt |
| Vorlast | 15 bis 20 N |
| Bruchlastmessung | Spitzenlastspeicher und Meßdatenerfassung |

Die geometrischen Abmessungen der Proben wurden vor der Biegeprüfung bestimmt (Breite und Höhe mit Meßuhr; Genauigkeit 0,003 mm; Länge mit Meßschieber; Genauigkeit 0,03 mm).

Der Prüfvorgang als solcher wurde folgendermaßen durchgeführt: Einlegen der Probe in die Belastungsvorrichtung (4-Punkt-Biegeauflager) mit einer Lehre, die sowohl die Biegevorrichtungsteile (oberes und unteres Auflager) wie auch die Probe gegenseitig ausrichtet. Danach wurde die Probe mit einer geringen Biegevorlast kraftgeregelt vorbelastet und die Justierlehre entfernt. Die Probe wurde anschließend mit einer konstanten Kraftanstiegsrate bis zum Versagen belastet. Die Registrierung der Maximalkraft erfolgte mit einem Spitzenwertspeicher und zusätzlich wurde der gesamte Kraft/Zeit-Verlauf mit einer Meßdatenerfassungsanlage aufgezeichnet. Nach dem Bruch der Probe kehrte die Prüfmaschine in die Ausgangsposition zurück, die Probenbruchstücke wurden entnommen und für eine später durchgeführte Bruchflächencharakterisierung separat aufbewahrt.

Zur Charakterisierung der Temperaturabhängigkeit der Materialfestigkeit wurden 4-Punkt-Biegeversuche bei 1000 °C gemäß DIN EN 843, Teil 2 durchgeführt. Die Prüfung erfolgte unter den nachfolgend tabellarisch beschriebenen Bedingungen.

| Prüfung | 4-Punkt-Biegebelastbarkeit bei 1000 °C |
|---|---|
| Probenzahl | mindestens 10 |
| Probenabmessungen (BxHxL) | 4,0 ± 0,02 3,0 ± 0,02 < 45 mm |
| Prüfmaschine | Universalprüfmaschine |
| Biegeauflagergeometrie | 40/20 mm, statisch bestimmt, alle Rollen drehbar, 3 Rollen kippbar |
| Umgebungsbedingungen | 20 °C, 50 bis 55 % rel. Feuchte |
| Testtemperatur | 1000 °C, durch 2 Thermoelemente kontrolliert |
| Belastungsgeschwindigkeit | 240 N/s $\triangle$ 200 MPa/s |
| Belastungsmodus | kraftgeregelt |
| Vorlast | 15 bis 20 N |
| Bruchlastmessung | Spitzenlastspeicher und Meßdatenerfassung |

Die geometrischen Abmessungen der Proben wurden vor der Biegeprüfung bestimmt (Breite und Höhe mit Meßuhr, Genauigkeit 0,003 mm; Länge mit Meßschieber, Genauigkeit 0,03mm).

Die verwendete Prüfvorrichtung ist aus einem hochtemperaturresistenten Werkstoff ($Al_2O_3$, SSiC) gefertigt. Zur Erwärmung der Probe wurde ein elektrisch beheizter Hochtemperaturofen verwendet, der die gesamte Prüfvorrichtung und die Probe erwärmt. Um die hochtemperaturbeständige Prüfvorrichtung herum wurde der aufklappbare Ofen montiert. Der Übergang der Prüfvorrichtung an die Belastungsteile der Prüfmaschine sowie die Kraftmeßdose wurden wassergekühlt.

Der Prüfvorgang wurde folgendermaßen durchgeführt:

Einlegen der Probe in die Belastungsvorrichtung (4-Punkt-Biegeauflager) mit einer Lehre, die sowohl die Biegevorrichtungsteile (oberes und unteres Auflager) wie auch die Probe gegenseitig ausrichtet. Danach wurde die Probe mit einer geringen Biegevorlast kraftgeregelt vorbelastet und die Justierlehre entfernt. Der Ofen wurde geschlossen und die Temperatur mit einer Geschwindigkeit von ca. 900 °C/h aufgeheizt. Nach einer Temperaturausgleichszeit von ca. 15 Min. auf Prüftemperatur wurde der eigentliche Belastungsvorgang gestartet. Die Probe wurde mit einer konstanten Kraftanstiegsrate bis zum Versagen belastet. Die Registrierung der Maximalkraft erfolgte mit einem Spitzenwertspeicher und zusätzlich wurde der gesamte Kraft/Zeit-Verlauf mit einer Meßdatenerfassungsanlage aufgezeichnet. Nach dem Bruch der Probe kehrte die Prüfmaschine in die Ausgangsposition zurück, der Ofen wurde ausgeschaltet und kühlte langsam ab. Nach Erreichen der Raumtemperatur wurden die Probenbruchstücke entnommen und für die später durchgeführte Bruchflächencharakterisierung separat aufbewahrt.

Die statistische Auswertung der Festigkeitsexperimente setzt sich aus folgenden Teilen zusammen:

i) Bestimmung von Mittelwert und Standardabweichung der Biegefestigkeit:
Für jede Probenserie wurden Mittelwert und Standardabweichung berechnet.

ii) Bestimmung der Weibullparameter der Festigkeitsverteilung und Anfertigung eines Weibull-Plots:
Bei Probenserien mit ≥ 10 Proben (normalerweise ≥ 30 Proben) werden die Weibullparameter m und $\sigma_o$ mittels des Maximum-Likelihood-Verfahrens bestimmt. Dieses Verfahren ist ausführlich in DIN 51110, Teil 3 beschrieben. Auf der Basis der Einzelmeßergebnisse wird zusätzlich ein Weibull-Diagramm erstellt, in dem der Zusammenhang zwischen der Versagenswahrscheinlichkeit der Prüfkörper und der angelegten Belastung dargestellt wird.

iii) Interpolationsbedingungen:
Basierend auf den nach ii) ermittelten Weibullparametern wird auf die Biegebelastbarkeit bei einer Ausfallwahrscheinlichkeit von $10^{-6}$ extrapoliert nach der Formel: $\sigma_{10-6} = \sigma_o \cdot (10^{-6})^{1/m}$. Hierbei müssen alle Meßwerte für die Berechnung der Weibullparameter verwendet werden, auch alle Ausreißer.

Zur E-Modulcharakterisierung wurden folgende Messungen durchgeführt:

| Prüfung | dynamischer E-Modul |
|---|---|
| Probenabmessungen (BxHxL) | 4,0 ± 0,02 3,0 ± 0,02 < 45 mm |
| Umgebungsbedingungen | 20 °C, 50 bis 55 % rel. Feuchte |
| Probenzustand | allseitig geschliffen, ungefast |
| Meßgerät | Grindo-Sonic-Meßgerät |

(fortgesetzt)

| Prüfung | dynamischer E-Modul |
| --- | --- |
| Meßbedingungen | mechanisches Anschlagen der flachkant liegenden Proben ⇒ Eigenfrequenzmessung |
| Probenvermessung | Meßgenauigkeit: Abmaße:     0,03 mm |
| | Masse:     ± 0,001 g |

Das Meßprinzip beruht auf der Messung der Eigenfrequenz von schwingungsfähigen Prüfkörpern. Die Biegeproben werden durch mechanisches Anschlagen in eine transversale Biegeschwingung versetzt. Bereits kurze Zeit nach dem Anschlagen der Probe sind die, die Eigenschwingung störenden Schlageinflüsse abgeklungen, und die Messung der Eigenschwingfrequenz ist möglich. Zur Berechnung des E-Moduls eines Werkstoffs sind neben der Kenntnis der genauen Abmessungen die Dichte und der Schwingungsmodus wesentlich. Hieraus kann der E-Modul berechnet werden (siehe Grindo-Sonic-Manual = Handbuch des Geräteherstellers).

Die Prüfung wird folgendermaßen durchgeführt:

Die vermessene und gewogene Probe wird flachkant auf eine Schaumstoffunterlage gelegt und von oben mit einem stabförmigen Gegenstand leicht angeschlagen. Direkt unterhalb der Probenmitte (1 bis 2 mm Abstand) ist ein Mikrofon angeordnet, das den Schwingungsklang des Prüfkörpers registriert. Dieses Signal wird elektronisch gefiltert und aufbereitet und in Form einer Frequenz oder Schwingungsdauer optisch angezeigt. Dieser Versuch wird je Probe wenigstens zehnmal wiederholt und der Mittelwert von 10 Messungen für die weitere Auswertung notiert. Die Werte der Digitalanzeige sollten bei den 10 Messungen nicht mehr als ± 1 Digit schwanken. Ist die Schwankung größer, so ist entweder der Schwingungsmodus nicht richtig erzielt oder die Dämpfung des Materials ist zu groß.

Für die Rißzähigkeitscharaktersierung wird die gleiche Probenform wie bei den Messungen zur Festigkeitscharaktersierung benutzt. Die folgende Schnittpräparation und die Bestimmung der geometrischen Größen richtet sich nach der DIN 51 109. Die hergestellten Biegestäbe werden an Ihrer Zugseite (polierte Probenfläche) mit einer Drahtsäge (Drahtdicke ca. 80 μm) ca. 1 mm tief eingeschnitten. Die Schnittbreite im Bereich des Kerbgrundes darf dabei 0.1 mm nicht übersteigen. Die Tiefe der Einkerbung wird an drei Referenzpunkten gemessen und gemittelt. Die Abweichungen der Meßgrößen dürfen höchstens 10 % des Mittelwertes betragen.

Prüfung der Rißzähigkeit:

Grundlage für die Prüfung und Auswertung ist der Normentwurf DIN 51 109. Die Prüfung erfolgt unter Vierpunkt-Biegebelastung wie bereits beschrieben, wobei die Prüfzeit so gewählt wird, daß der Bruch nach 5 bis 10 Sekunden erfolgt. Die Belastung wird anders als bei der Vierpunktbiegeprüfung weggeregelt mit konstanter Verschiebungsgeschwindigkeit aufgebracht und die Kraft als Funktion der Zeit beziehungsweise des Weges aufgezeichnet. Nach dem Bruch des Prüfteils erfolgt eine Kontrolle des Bruchbildes, um Fehlversuche zu detektieren. Aus Bruchkraft und den geometrischen Größen wird der $K_{IC}$-Wert berechnet. Für die Hochtemperaturprüfung gelten die gleichen Bedingungen, die Messungen werden jedoch bei der entsprechend erhöhten Temperatur durchgeführt.

Die Prüfung des Kriechverhaltens orientiert sich an der Beschreibung der Kurzzeitfestigkeitsprüfung bei Hochtemperatur. Nach Erreichen der Solltemperatur wird die Probebelastung von Vorlast auf die Prüflast angehoben. Diese liegt typischerweise mindestens um einen Faktor von 10 höher als die Vorlast (100 bis 200 Newton). Meßgröße ist die Mittendurchbiegung der Probe, die durch ein Referenzabtastsystem aus $Al_2O_3$ bestimmt wird. Hierzu wird die Durchbiegung der Probenmitte relativ zu zwei Referenzpunkten bestimmt. Aus dieser Meßgröße läßt sich die tatsächliche Mittendurchbiegung und hieraus die Randfaserdehnung (Dehnung auf der Probenzugseite) ermitteln. Das Meßsignal wird mehrere Stunden, beziehungsweise Tage, aufgezeichnet, bis sich ein stationärer Verlauf einstellt (konstante Zunahme bzw. konstantes Signal). Hieraus ergeben sich zwei Prüfresultate: Startkriechrate und stationäre Kriechrate. Die stationäre Kriechrate kann nur bedingt als Materialkenngröße verwendet werden, da die Inhomogenität der Belastung Spannungsumlagerungen in der Probe bewirken, die eine analytische Auswertung erschweren bzw. verhindern. Als Materialkennung wird deshalb die Startkriechrate (innerhalb der ersten 10 h) bestimmt und die Kriechkurve als Materialeigenschaft festgehalten. Die Messung erfordert eine konstante Umgebungstemperatur, die maximal um 1 K schwanken darf. Während des gesamten Versuchs sind die Meßgeräte auf Temperatureinflüsse hin zu überprüfen.

In den nachfolgend aufgeführten Ausführungsbeispielen soll die Erfindung für den Fachmann noch deutlicher dargestellt werden. Als exemplarisches Bauteil wurde das Ventil gewählt (Beispiel 1: Zylinder, Beispiele 2 bis 4: Ventile).

Beispiel 1

Die in Tabelle 1 genannten Bestandteile einer anorganischen Pulvermischung gemäß Pulvermischung B wurden unter Verwendung von 0,5 Gew.-% Polycarbonsäure und 0,2 Gew.-% Ammoniumpolyacrylat (Wirksubstanz bezogen auf die Gesamtfeststoffmenge) als Dispergierhilfsmittel in einer wäßrigen Suspension mit 62 % Feststoffgehalt in einer Rührwerkskugelmühle über einen Zeitraum von 75 min gemischt, beziehungsweise gemahlen.

Nach Beendigung der Mahlung wurden dem Schlicker 1,0 Gew.-% Polyvinylalkohol als 12,5 %-ige Lösung und 1,0 Gew.-% Polyethylenglykol MW 400 zugesetzt. Danach erfolgte die Sprühtrocknung mittels Zweistoffdüse unter folgenden Bedingungen:

| Lufteintrittstemperatur | 205 °C |
|---|---|
| Luftaustrittstemperatur | 80 °C |
| Verhältnis Luft- zu Schlickermenge an der Düse | 0,85 |

Das auf diese Weise hergestellte Granulat besitzt folgende Eigenschaften:

| Schüttdichte | | $0,95\ \mathrm{g/cm^3}$ |
|---|---|---|
| Restfeuchte | | 1,3 % |
| Granulatgröße | $d_{10}$ | 32 µm |
| | $d_{50}$ | 70 µm |
| | $d_{90}$ | 110 µm |
| Feinanteil < 24 µm | | 4 %. |

Das Granulat wurde dann mit dem isostatischen Trockenmatrizenverfahren bei einem Preßdruck von 2000 bar isostatisch geformt.

Nach dem Ausheizen der organischen Preßhilfsmittel erfolgte die Sinterung unter folgenden Bedingungen: $T_{max} = 1865\ °C$;

erste Temperaturstufe:     $0,945 \cdot T_{max}$ über eine Zeitdauer von 17 min, bei einem $N_2$-Druck von 0,4 MPa;
zweite Temperaturstufe:     $0,975 \cdot T_{max}$ über eine Zeitdauer von 40 min bei einem $N_2$-Druck von 4,5 MPa;

nachfolgend Temperaturerhöhung auf $T_{max}$ und Druckerhöhung auf 10 MPa über eine Druckhaltezeit von 15 min.

Die auf diese Weise erzielten Formteileigenschaften sind in Tabelle 2 im einzelnen angegeben.

**Beispiel 2:**

Die Ausgangspulver wurden gemäß Beispiel 1 gemischt, gemahlen und nach Abschluß der Mahlung ohne weiteren Polymerzusatz unter sonst gleichen Bedingungen wie im Beispiel 1 sprühgetrocknet.

Danach erfolgte die Redispergierung des oben genannten Pulvers mit einem Feststoffgehalt von 65 Gew.-%. Bezogen auf die Pulvereinwaage, wurde dann ein Zusatz von 0,5 % eines Dispergators (Aminoalkohol) und 3 % Wachs auf Basis Rohmontanwachs (Esterwachs) zugegeben. Der Schlicker wurde über einen Zeitraum von 2 h unter Rühren homogenisiert und dann in konventionelle Gipsformen zu Ventilen vergossen. Nach einer Zeit von 1 h wurden die Grünteile entformt und wie in Beispiel 1 gesintert.

**Beispiel 3:**

Die Pulveraufbereitung und -trocknung erfolgte wie im Beispiel 2 gemäß Pulvermischung C. Danach wurde das Material mit organischen Komponenten in einem Knetmischer über eine Zeit von 2 h bei einer Temperatur von 190 °C intensiv vermischt. Die Organik setzt sich wie folgt zusammen:

74,3 % Polyoxymethylen, Schmelzindex: 52
19,2 % Polyethylenglycol, Molekulargewicht: 7000
6,4 % mikronisiertes Amidwachs

Das durch Abkühlen im Kneter granulierte Material wurde sodann in einer Spritzgußmaschine bei 185 °C Düsentemperatur mit einem Einspritzdruck von 135 MPa zu Motorenventilen gespritzt. Die Grünteile wurden in einem Ausheizofen über eine Zeit von 48 h auf 400 °C aufgeheizt und so die organischen Bestandteile vollständig entfernt.

Die Sinterung erfolgt gemäß Beispiel 1; die resultierenden Formteileigenschaften enthält Tabelle 2.

Beispiel 4:

Si$_3$N$_4$-Pulver Typ A wird gemäß Beispiel 1 und den in Tabelle 1 für Pulver A genannten Bedingungen mit Sinteradditiven vermischt, gemahlen und sprühgetrocknet.

Motorenventile wurden mit dem isostatischen Naßmatrizenverfahren bei 2500 bar gepreßt und unter den wie folgt geänderten Bedingungen gegenüber Beispiel 1 gesintert:

Die Haltezeit bei allen 3 Temperaturstufen betrug 40 min. Der Druckaufbau erfolgte auf 1,5 MPa bei Erreichen der ersten Temperaturstufe und auf 5 MPa, nachdem 1/4 der Haltezeit der zweiten Temperaturstufe gesintert waren. Danach wurde der Druck auf 8 MPa erhöht und bis zum Ende der Temperaturhaltezeit konstant gehalten. Die daraus resultierenden Formteileigenschaften enthält Tabelle 2.

Tabelle 1:

| Pulvereigenschaften, chemische Zusammensetzung der Pulvermischung, Parameter der Aufbereitung: | | | |
|---|---|---|---|
| Pulvereigenschaften | Typ A | Typ B | Typ C |
| Anteil α-Si$_3$N$_4$ [%] | 96,5 | 98 | 98 |
| O-Gehalt [%] | 1,8 | 1,5 | 1,5 |
| C-Gehalt [%] | 0,15 | 0,1 | 0,1 |
| Kation. Verunreinig. [%] | 0,05 | 0,025 | 0,025 |
| mittl. Korngröße [μm][1] | 0,3 | 0,45 | 0,45 |
| spez. Oberfläche [m$^2$/g] | 19,3 | 12 | 12 |
| Pulvermischung: | A | B | C |
| Si$_3$N$_4$ [Gew.%] | 87,5 | 89,6 | 92,0 |
| Y$_2$O$_3$ [Gew.%] | 8,2 | 6,66 | 5,34 |
| Al$_2$O$_3$ [Gew.%] | 4,1 | 3,34 | 2,66 |
| HfO$_2$ [Gew.%] | 0,2 | 0,4 | ---- |

[1] Meßmethode: Laserbeugungsspektrometrie mit dem Gerät Master Sizer SB.OC der Firma Malvern

Tabelle 2:

| Formteileigenschaften: | | | | |
|---|---|---|---|---|
| Beispiel Nr. | 1 | 2 | 3 | 4 |
| Dichte [% d. th. Dichte] | 99,2 | 99,0 | 98,8 | 99,0 |
| mittlere Biegebruchfestigkeit bei RT [MPa] | 1402 | 1280 | 1184 | 944 |
| Weibullmodul bei RT | 19 | 21 | 25 | 31 |
| Bruchzähigkeit K$_{IC}$ [MPa·$\sqrt{m}$] bei RT | 9 | 8,8 | 8,5 | 7,5 |
| Biegebelastbarkeit bei RT bei einer Ausfallwahrscheinlichkeit von 10$^{-6}$ [MPa] | 694 | 671 | 690 | 615 |
| mittlere Biegebruchfestigkeit bei 1000 °C | 911 | 850 | 930 | 791 |
| Weibullmodul bei 1000 °C | 17 | 23 | 24 | 23 |
| Biegebelastbarkeit bei 1000 °C bei einer Ausfallwahrscheinlichkeit von 10$^{-6}$ [Mpa] | 405 | 475 | 539 | 439 |
| Kriechrate bei 130 MPa und 1200 °C·10$^{-4}$ [h$^{-1}$] | 0,6 | 0,6 | 0,4 | 0,9 |
| Bruchzähigkeit K$_{IC}$ bei 1000 °C [MPa·$\sqrt{m}$] | 8 | 7,9 | 7,7 | 6,5 |

In den beigefügten Zeichnungen sind zur besseren Veranschaulichung noch Weibulldiagramme von Materialproben beigefügt. Im einzelnen zeigt Diagramm 1 ein Weibulldiagramm für die Biegefestigkeit bei Raumtemperatur (RT) und Hochtemperatur (HT) der Vergleichsbeispiele 1 und 2 aus dem Schlußbericht Daimler Benz AG, während die Diagramme 2 und 3 die Weibulldiagramme für Raumtemperatur (RT) und Hochtemperatur (HT) von Proben nach den erfindungsgemäßen Beispielen 1 bis 4 zeigen. Die Meßergebnisse dokumentieren, daß die Kombination hoher Raum- und gleichzeitig hoher Hochtemperaturbiegefestigkeit neu und besonders überraschend ist.

**EP 0 698 003 B1**

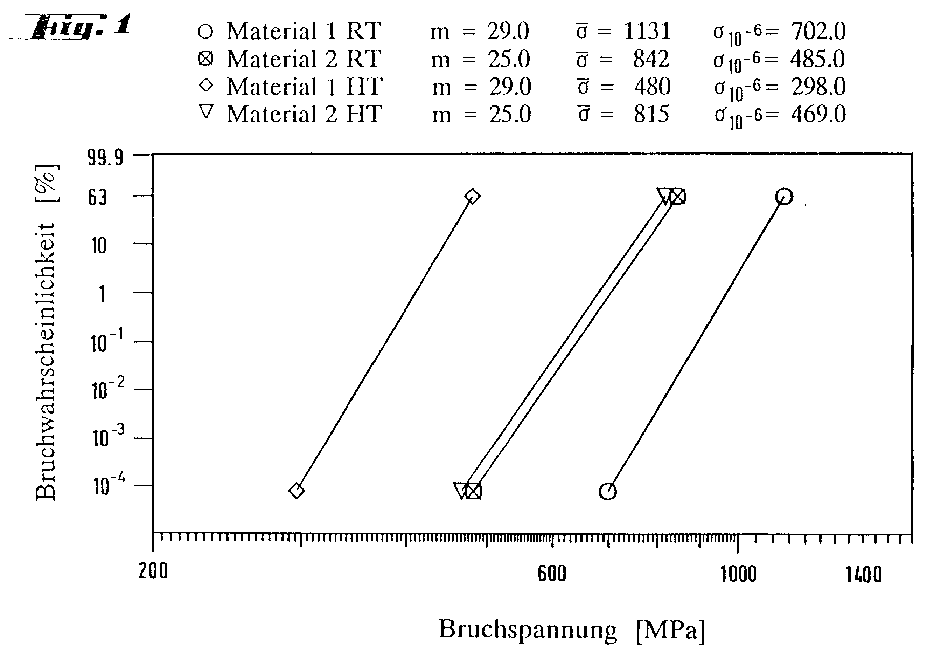

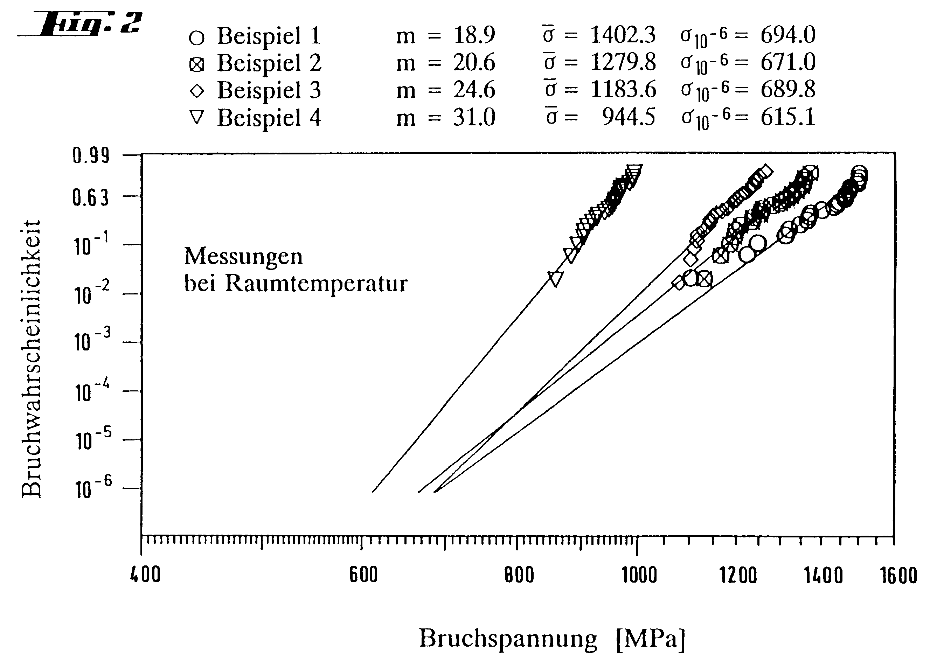

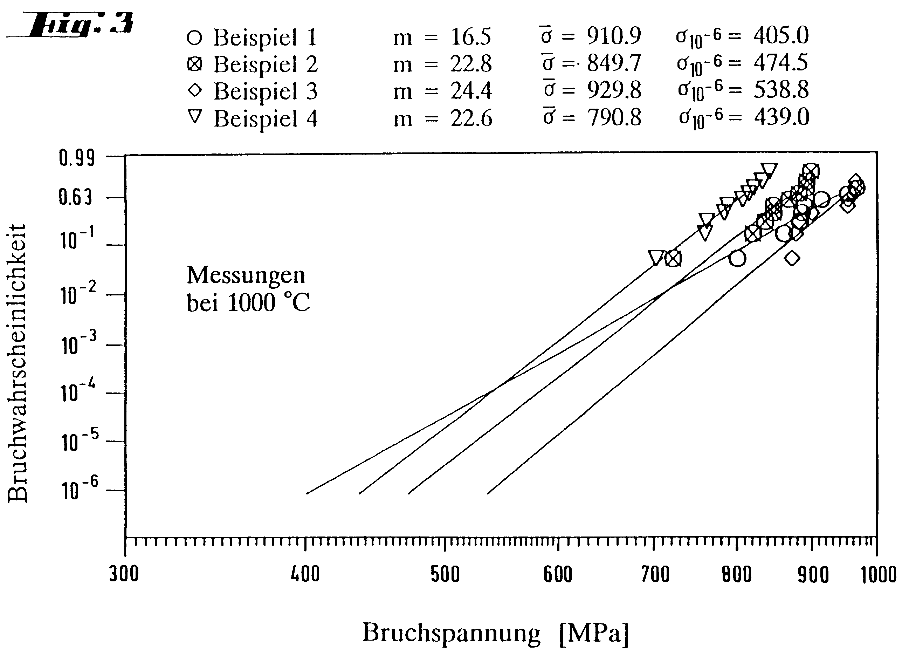

**Patentansprüche**

1. Bauteil aus hochfester Siliziumnitridkeramik für den Motoren-, Maschinen- und Gerätebau, dadurch gekennzeichnet, daß

   für die Herstellung der Siliziumnitridkeramik eine Mischung aus $\geq$ 87,5 Gew.-% $Si_3N_4$-Pulver mit $\leq$ 12,5 Gew.-% Sinteradditiven, die $Al_2O_3$- und $Y_2O_3$-Pulver enthalten, verwendet wurde und daß die Siliziumnitridkeramik die folgenden Eigenschaften in Kombination aufweist:

   ◆ eine Raumtemperaturbiegebelastbarkeit von mindestens 600 MPa bei einer Ausfallwahrscheinlichkeit von $1 \cdot 10^{-6}$;
   ◆ eine Hochtemperaturbiegebelastbarkeit bei 1000 °C von mindestens 350 MPa bei einer Ausfallwahrscheinlichkeit von $1 \cdot 10^{-6}$;
   ◆ eine Bruchzähigkeit von mindestens 6 MPa$\cdot\sqrt{m}$ bei 20 bis 1000 °C; und
   ◆ eine maximale Kriechrate bei einer Belastung von 130 MPa bei 1200 °C von $1 \cdot 10^{-4}$ 1/h.

2. Bauteil nach Anspruch 1, dadurch gekennzeichnet, daß die Hochtemperaturbiegebelastbarkeit der Siliziumnitridkeramik bei 1000 °C wenigstens 380 MPa beträgt, bevorzugt wenigstens 400 MPa, bei einer Ausfallwahrscheinlichkeit von $1 \cdot 10^{-6}$.

3. Bauteil nach Anspruch 1, dadurch gekennzeichnet, daß die Bruchzähigkeit der Siliziumnitridkeramik bei Raumtemperatur einen Wert von wenigstens 7 MPa$\cdot\sqrt{m}$ aufweist, bevorzugt wenigstens 7,5 MPa$\cdot\sqrt{m}$.

4. Bauteil nach Anspruch 1, dadurch gekennzeichnet, daß die Bruchzähigkeit der Siliziumnitridkeramik bei 1000 °C einen Wert von wenigstens 6,5 MPa$\cdot\sqrt{m}$ aufweist, bevorzugt wenigstens 7 MPa$\cdot\sqrt{m}$.

5. Bauteil nach einem der Ansprüche 1 bis 4, dadurch gekennzeichnet, daß es sich dabei um ein Ein- oder Auslaßventil als solches, einen Ventilsitzring, eine Ventilführung, einen Turboladerrotor, eine Glühkerze, einen Glühstift, eine Vorbrennkammer, eine Wirbelkammer, eine Einspritzdüse, einen Kipphebelbeschlag, einen Kolben, einen Kolbenboden, einen Kolbenring, einen Kolbenbolzen, eine Zylinderlaufbüchse, einen Tassenstößel, einen Ventilfederteller, eine Nockenwelle und/oder deren Einzelkomponenten, eine Zylinderkopfplatte oder eine Kipphebelrolle, beziehungsweise um hochbeanspruchte Buchsen, Gleitlager, Kugellager oder Wälzlager handelt.

**Claims**

1. A component of high strength silicon nitride ceramic for construction of engines, machines and apparatus, wherein the silicon nitride ceramic has been produced using a mixture of $\geq$ 87.5% by weight of $Si_3N_4$ powder and $\leq$ 12.5% by weight of sintering aids comprising $Al_2O_3$ powder and $Y_2O_3$ powder, and wherein the silicon nitride ceramic combines the following properties:

   ◆ a room-temperature flexural loadability of at least 600 MPa at a failure probability of $1 \cdot 10^{-6}$;
   ◆ a high-temperature flexural loadability at 1000°C of at least 350 MPa at a failure probability of $1 \cdot 10^{-6}$;
   ◆ a fracture toughness of at least 6 MPa$\cdot\sqrt{m}$ at from 20 to 1000°C; and
   ◆ a maximum creep rate at a load of 130 MPa at 1200°C of $1 \cdot 10^{-4}$ 1/h.

2. A component as claimed in claim 1, wherein the high-temperature flexural loadability of the silicon nitride ceramic at 1000°C is at least 380 MPa, preferably at least 400 MPa, at a failure probability of $1 \cdot 10^{-6}$.

3. A component as claimed in claim 1, wherein the fracture toughness of the silicon nitride ceramic at room temperature has a value of at least 7 MPa$\cdot\sqrt{m}$, preferably at least 7.5 MPa$\cdot\sqrt{m}$.

4. A component as claimed in claim 1, wherein the fracture toughness of the silicon nitride ceramic at 1000°C has a value of at least 6.5 MPa$\cdot\sqrt{m}$, preferably at least 7 MPa$\cdot\sqrt{m}$.

5. A component as claimed in any one of claims 1 to 4 which is an inlet or exhaust valve as such, a valve seat ring, a valve guide, a turbocharger rotor, a glow plug, a precombustion chamber, a swirl chamber, an injection nozzle, a rocker-arm fitting, a piston, a piston crown, a piston ring, a piston pin, a cylinder liner, a bucket tappet, a valve-spring retainer, a camshaft and/or individual components thereof, a cylinder head plate or a rocker-arm roller, or a highly stressed bush, sliding bearing, ball bearing or roller bearing.

**Revendications**

1. Composant en une céramique au nitrure de silicium ayant une grande résistance mécanique, pour la construction des moteurs, des machines et des appareils, caractérisé en ce que, pour la fabrication de la céramique au nitrure de silicium, on utilise un mélange de $\geq$ 87,5 % en poids de poudre de $Si_3N_4$ avec $\leq$ 12,5 % en poids d'additifs de frittage contenant une poudre de $Al_2O_3$ et de $Y_2O_3$, et que la céramique au nitrure de silicium présente en combinaison les propriétés suivantes :

   - une résistance à une sollicitation de flexion à la température ambiante d'au moins 600 MPa pour une probabilité de défaillance de $1.10^{-6}$ ;
   - une résistance à une sollicitation de flexion à haute température à 1000°C d'au moins 350 MPa pour une probabilité de défaillance de $1.10^{-6}$ ;
   - une ténacité à la rupture d'au moins 6 MPa.$\sqrt{m}$ à une température de 20 à 1000°C ; et
   - un taux de fluage maximal, pour une contrainte de 130 MPa à 1200°C, de $1.10^{-4}$ 1/h.

2. Composant selon la revendication 1, caractérisé en ce que la résistance à une sollicitation de flexion à haute température de la céramique au nitrure de silicium à 1000°C est d'au moins 380 MPa, de préférence d'au moins 400 MPa, pour une probabilité de défaillance de $1.10^{-6}$.

3. Composant selon la revendication 1, caractérisé en ce que la ténacité à la rupture de la céramique au nitrure de silicium à la température ambiante a une valeur d'au moins 7 MPa.$\sqrt{m}$, de préférence d'au moins 7,5 MPa.$\sqrt{m}$.

4. Composant selon la revendication 1, caractérisé en ce que la ténacité à la rupture de la céramique au nitrure de silicium à 1000°C a une valeur d'au moins 6,5 MPa.$\sqrt{m}$ et de préférence d'au moins 7 MPa.$\sqrt{m}$.

5. Composant selon l'une des revendications 1 à 4, caractérisé en ce qu'il s'agit alors de l'un des composés suivants, une soupape d'admission ou d'échappement en l'état, un siège de soupape rapporté, un guide de soupape, un rotor de turbocompresseur, une bougie de préchauffage, une bougie-crayon de préchauffage, une chambre de précompression, une chambre à turbulence, un injecteur, une commande de culbuteur, un piston, une tête de piston, un segment de piston, un axe de piston, une chemise de cylindre, un poussoir à coupelle, un chapeau de ressort de soupape, un arbre à cames ou ses composants individuels, un couvercle de culasse et ou un galet de culbuteur, ou encore des douilles, paliers glissants, roulements à billes ou roulements à rouleaux soumis à de fortes sollicitations.

**Fig. 1**

| | | | |
|---|---|---|---|
| ○ Material 1 RT | m = 29.0 | $\bar{\sigma}$ = 1131 | $\sigma_{10}{}^{-6}$ = 702.0 |
| ⊗ Material 2 RT | m = 25.0 | $\bar{\sigma}$ = 842 | $\sigma_{10}{}^{-6}$ = 485.0 |
| ◇ Material 1 HT | m = 29.0 | $\bar{\sigma}$ = 480 | $\sigma_{10}{}^{-6}$ = 298.0 |
| ▽ Material 2 HT | m = 25.0 | $\bar{\sigma}$ = 815 | $\sigma_{10}{}^{-6}$ = 469.0 |

Bruchwahrscheinlichkeit [%] vs. Bruchspannung [MPa]

Fig. 2

| | | | |
|---|---|---|---|
| ○ Beispiel 1 | m = 18.9 | $\bar{\sigma}$ = 1402.3 | $\sigma_{10^{-6}}$ = 694.0 |
| ⊗ Beispiel 2 | m = 20.6 | $\bar{\sigma}$ = 1279.8 | $\sigma_{10^{-6}}$ = 671.0 |
| ◇ Beispiel 3 | m = 24.6 | $\bar{\sigma}$ = 1183.6 | $\sigma_{10^{-6}}$ = 689.8 |
| ▽ Beispiel 4 | m = 31.0 | $\bar{\sigma}$ = 944.5 | $\sigma_{10^{-6}}$ = 615.1 |

Messungen
bei Raumtemperatur

Bruchspannung [MPa]

Bruchwahrscheinlichkeit

Fig. 3